# EUROPEAN PATENT APPLICATION

(11) **EP 4 786 414 A1**
(43) Date of publication of application: **05.08.2026**
(21) Application number: 25869659.0
(22) Date of filing: 26.11.2025
(51) Int. Cl.: C01B 21/086

(54) **LIQUID BIS(FLUOROSULFONYL)IMIDE METAL SALT AND PREPARATION METHOD THEREFOR**

(30) Priority: 28.11.2024 CN 202411729291
(71) Applicant: Jiujiang Tinci Materials Technology Co., Ltd., Jiujiang, Jiangxi 332000 (CN)
(72) Inventor: LI, Gongchun, Jiujiang, Jiangxi 332000 (CN); LIU, Du, Jiujiang, Jiangxi 332000 (CN); QIN, Xiaokang, Jiujiang, Jiangxi 332000 (CN); HUANG, Xiaowei, Jiujiang, Jiangxi 332000 (CN)
(74) Representative: Studio Torta S.p.A.
(86) International application number: PCT/CN2025/137780
(87) International publication number: WO 2026/114263

(57) **Abstract**

The present disclosure provides a metal bis(fluorosulfonyl)imide liquid salt and a preparation method thereof. The method includes: reacting bis(fluorosulfonyl)imide with a metal fluoride compound, to obtain a molten reaction solution; and performing a devolatilization treatment on the reaction solution until an EP1 acidity, calculated as an equivalent amount of hydrofluoric acid, is less than or equal to 0.5 ppm, to obtain a bis(fluorosulfonyl)imide metal compound, and dissolving the bis(fluorosulfonyl)imide metal compound in a solvent, and performing a deacidification treatment using a resin on the bis(fluorosulfonyl)imide metal compound solution, to obtain the metal bis(fluorosulfonyl)imide liquid salt. A heating temperature of the devolatilization treatment is below 140°C.

## Description

### CROSS-REFERENCE TO RELATED APPLICATION

This application claims priority and benefits to Chinese Patent Application No. 202411729291.8, filed with China National Intellectual Property Administration on November 28, 2024, the entire disclosure of which is incorporated herein by reference.

### FIELD

The present disclosure relates to a method for preparing a bis(fluorosulfonyl)imide metal compound, and more particularly, to a metal bis(fluorosulfonyl)imide liquid salt and a preparation method thereof, which belongs to the technical field of new energy materials.

### BACKGROUND

With the growing attention to a green low-carbon economy, metal compound batteries (e.g., lithium batteries and sodium batteries) have attracted extensive attention due to their advantages, such as high operating voltage, high energy density, long service life, and no memory effect, and are widely applied in new energy vehicles, digital products, energy storage devices, and other fields. A battery consists of four core components, including a positive electrode, a negative electrode, a separator, and an electrolyte, among which the electrolyte exerts a significant impact on cycle life, high temperature and low temperature performance, and safety performance of the battery.

Currently, hexafluorophosphate metal compounds (such as LiPF₆, NaPF₆) are the most widely used liquid salt electrolytes, yet they still suffer from a series of drawbacks, such as poor thermal stability, poor hydrolytic stability, and decomposition to release HF. Bis(fluorosulfonyl)imide metal compounds (such as LiFSI, NaFSI) are novel fluorinated metal salts that are expected to serve as primary next-generation components of the electrolyte. Compared with the hexafluorophosphate metal compounds, the bis(fluorosulfonyl)imide metal compounds feature a higher decomposition temperature, better hydrolytic stability, and superior electrochemical performance such as higher conductivity.

Currently, the bis(fluorosulfonyl)imide metal compounds are prepared by reacting bis(fluorosulfonyl)imide or derivatives thereof with alkali metal salts. After the preparation is completed, high-boiling liquid impurities such as residual acids or by-product water need to be removed. However, conventional impurity removal methods are costly and time-consuming, which has restricted large-scale production of the bis(fluorosulfonyl)imide metal compounds.

Therefore, how to improve preparation efficiency and reduce costs while ensuring high purity of the bis(fluorosulfonyl)imide metal compounds has become an urgent problem to be solved by those skilled in the art.

### SUMMARY

The present disclosure provides a method for preparing a metal bis(fluorosulfonyl)imide liquid salt. The preparation method can prepare a metal bis(fluorosulfonyl)imide liquid salt with high purity and has advantages of high production efficiency and low costs.

The present disclosure provides a metal bis(fluorosulfonyl)imide liquid salt, which exhibits high purity.

The present disclosure provides a method for preparing a metal bis(fluorosulfonyl)imide liquid salt. The method includes: reacting bis(fluorosulfonyl)imide with a metal fluoride compound, to obtain a molten reaction solution; and performing a devolatilization treatment on the reaction solution until an EP1 (first equivalence point) acidity, calculated as an equivalent amount of hydrofluoric acid, is less than or equal to 0.5 ppm, to obtain a bis(fluorosulfonyl)imide metal compound, and dissolving the bis(fluorosulfonyl)imide metal compound in a solvent, and performing a deacidification treatment using a resin on the bis(fluorosulfonyl)imide metal compound solution, to obtain the metal bis(fluorosulfonyl)imide liquid salt. A heating temperature of the devolatilization treatment is below 140°C.

The present disclosure also provides a metal bis(fluorosulfonyl)imide liquid salt. The metal bis(fluorosulfonyl)imide liquid salt is prepared by the method for preparing the bis(fluorosulfonyl)imide metal compound as described above. The metal bis(fluorosulfonyl)imide liquid salt includes impurities of sulfamate ions less than or equal to 100 ppm, fluorosulfonate ions less than or equal to 300 ppm, and fluorosulfonamide less than or equal to 10 ppm.

In the method for preparing the metal bis(fluorosulfonyl)imide liquid salt of the present disclosure, by combining the devolatilization treatment and the deacidification treatment using the resin, most of the acidic substances can first be efficiently and quickly removed from the molten reaction solution under high-temperature and negative-pressure conditions, making the EP1 acidity of the reaction solution, calculated as an equivalent amount of hydrofluoric acid, less than or equal to 0.5 ppm. Then, the remaining acidic substances can be quickly removed using the resin. In this way, the metal bis(fluorosulfonyl)imide liquid salt with high purity can be prepared, and a post-treatment duration is short. Furthermore, a batch of resin can be reused for multiple times, reducing the costs while avoiding cumbersome operations caused by frequent resin replacement. In addition, the liquid salt is obtained by performing the deacidification treatment using the resin after dissolving the bis(fluorosulfonyl)imide metal compound. In this way, a pulverization process required after cooling and solidification can be omitted, thereby simplifying the production process, shortening a production duration, and reducing the costs. Furthermore, the liquid salt can be directly applied in an electrolyte, reducing a process of dissolving an electrolyte salt when preparing the electrolyte.

The metal bis(fluorosulfonyl)imide liquid salt according to the present disclosure exhibits high purity, thereby facilitating its wide application in the battery field.

### DETAILED DESCRIPTION OF THE EMBODIMENTS

In order to make the purposes, technical solutions, and advantages of the present disclosure clearer, the technical solutions in the embodiments of the present disclosure are described clearly and completely with reference to the embodiments of the present disclosure. Obviously, the embodiments described here are only some embodiments of the present disclosure and are not all embodiments of the present disclosure. Based on the embodiments of the present disclosure, other embodiments obtained by those skilled in the art without inventive labor fall within the scope of the present disclosure.

The present disclosure provides a method for preparing a metal bis(fluorosulfonyl)imide liquid salt. The method includes: reacting bis(fluorosulfonyl)imide with a metal fluoride compound, to obtain a molten reaction solution; and performing a devolatilization treatment on the reaction solution until an EP1 acidity, calculated as an equivalent amount of hydrofluoric acid, is less than or equal to 0.5 ppm, to obtain a bis(fluorosulfonyl)imide metal compound; and dissolving the bis(fluorosulfonyl)imide metal compound in a solvent; and performing a deacidification treatment using a resin on the bis(fluorosulfonyl)imide metal compound solution, to obtain the metal bis(fluorosulfonyl)imide liquid salt. A heating temperature of the devolatilization treatment is below 140°C.

Specifically, the bis(fluorosulfonyl)imide and the metal fluoride compound are mixed, and then the mixture reacts at a certain temperature. After the reaction is completed, a reaction solution containing the bis(fluorosulfonyl)imide metal compound is obtained. The reaction solution containing the bis(fluorosulfonyl)imide metal compound is in a molten state. Then, the devolatilization treatment is performed on the reaction solution by regulating the parameters such as the temperature (below 140°C) and the vacuum pressure to quickly remove most of low-boiling impurities (such as HF, bis(fluorosulfonyl)imide). The EP1 acidity of the reaction solution, calculated as an equivalent amount of hydrofluoric acid, is monitored until it is not greater than 0.5 ppm to obtain the bis(fluorosulfonyl)imide metal compound. Then, the bis(fluorosulfonyl)imide metal compound is dissolved in the solvent to obtain the bis(fluorosulfonyl)imide metal compound solution, and the deacidification treatment using the resin is performed on the bis(fluorosulfonyl)imide metal compound solution to obtain the metal bis(fluorosulfonyl)imide liquid salt.

The metal fluoride compound of the present disclosure may be selected according to a target bis(fluorosulfonyl)imide metal compound. For example, lithium fluoride may be selected for preparing lithium bis(fluorosulfonyl)imide, and sodium fluoride may be selected for preparing sodium bis(fluorosulfonyl)imide.

The reaction between the bis(fluorosulfonyl)imide and the metal fluoride compound primarily aims to generate the bis(fluorosulfonyl)imide metal compound. As for the reaction temperature and the reaction duration, they may be determined according to selected raw materials and their proportions, provided that the final reaction liquid obtained is in the molten state.

In the present disclosure, prior to starting the devolatilization treatment, the reaction solution is not subjected to any temperature treatment, making the reaction solution remain at the reaction temperature. Thus, the bis(fluorosulfonyl)imide metal compound reaction solution can directly undergo devolatilization treatment in its molten state.

For the devolatilization treatment of the reaction solution, those skilled in the art may independently determine the relevant parameters of the devolatilization treatment (such as the vacuum pressure), provided that the impurities in the reaction solution (such as unreacted bis(fluorosulfonyl)imide and by-product HF) can be removed as much as possible in a short period of time, and the EP1 acidity, calculated as an equivalent amount of hydrofluoric acid, of the devolatilized bis(fluorosulfonyl)imide metal compound is guaranteed to be less than or equal to 0.5 ppm. The temperature of the devolatilization treatment in the present disclosure is below 140°C. If the heating temperature of the devolatilization treatment is too high, it may cause a condensation reaction of the bis(fluorosulfonyl)imide metal compound, generating by-products such as metal fluorosulfonates, thereby resulting in an abnormal increase in the content of fluorosulfonate ions.

The present disclosure does not limit the specific selection of the solvent, which may be selected according to actual needs.

The present disclosure does not limit the mass ratio of the bis(fluorosulfonyl)imide metal compound to the solvent, provided that the bis(fluorosulfonyl)imide metal compound can be dissolved.

The present disclosure does not limit a dissolution temperature of the bis(fluorosulfonyl)imide metal compound in the solvent, which may be selected according to actual needs.

The present disclosure does not limit the specific selection of the resin, which may be selected according to actual needs.

The deacidification treatment using the resin of the present disclosure can remove the acidic substances in the bis(fluorosulfonyl)imide metal compound to obtain a metal bis(fluorosulfonyl)imide liquid salt with high purity.

No water is generated in the preparation method of the present disclosure, which can avoid waste of energy and a duration required for subsequent water removal. Furthermore, the devolatilization treatment is performed on the reaction solution maintained at the reaction temperature, which can efficiently and quickly remove the impurities until the EP1 acidity, calculated as an equivalent amount of hydrofluoric acid, of the reaction solution is less than or equal to 0.5 ppm. By combining immediate devolatilization treatment at the maintained reaction temperature with control of the devolatilization concentration, taking the EP1 acidity, calculated as an equivalent amount of hydrofluoric acid, less than or equal to 0.5 ppm as an end point, the devolatilization duration can be shortened, avoiding spending a great deal of time removing the remaining trace amounts of acid. Furthermore, since the acidity is controlled within a certain range, a resin deacidification effect can be improved, thereby achieving high purity of the metal bis(fluorosulfonyl)imide liquid salt. In addition, due to the low content of the acidic substance in the bis(fluorosulfonyl)imide metal compound subsequent to the devolatilization treatment, effective resin consumption per treatment cycle for the resin deacidification can be reduced, lowering the costs. Further, the resin installed once can be reused multiple times, avoiding cumbersome operations caused by frequent resin replacement. In addition, by dissolving the bis(fluorosulfonyl)imide metal compound obtained subsequent to the devolatilization treatment and then performing the deacidification treatment using the resin, not only can the resin deacidification effect be improved, but also a pulverization process required after cooling and solidification can be omitted, thereby simplifying the production process, shortening the production duration, and reducing the costs.

The present disclosure does not limit the source and purity of bis(fluorosulfonyl)imide, which may be either commercially purchased or prepared as needed.

The present disclosure does not limit the source and purity of the metal fluoride compound, which may be selected according to actual needs.

Generally, through the post-treatment process of the present disclosure, the bis(fluorosulfonyl)imide metal compound exhibits a relatively higher purity and a relatively low impurity content. Specifically, the bis(fluorosulfonyl)imide metal compound includes impurities of sulfamate ions less than or equal to 350 ppm, fluorosulfonate ions less than or equal to 1,000 ppm, fluorosulfonamide less than or equal to 50 ppm, and chloride ions less than or equal to 20 ppm.

Contents of the impurities in the bis(fluorosulfonyl)imide and the bis(fluorosulfonyl)imide metal compound of the present disclosure may be obtained through ion chromatography and fluorine-19 nuclear magnetic resonance spectroscopy.

The EP1 acidity of the bis(fluorosulfonyl)imide metal compound of the present disclosure may be obtained by triethylamine potentiometric titration.

In a specific embodiment, a vacuum pressure of the devolatilization treatment ranges from 1 kPa to 0.1 kPa. For example, the vacuum pressure is 1 kPa, 0.9 kPa, 0.8 kPa, 0.7 kPa, 0.6 kPa, 0.5 kPa, 0.4 kPa, 0.3 kPa, 0.2 kPa, or 0.1 kPa. The heating temperature of the devolatilization treatment is not below 60°C. For example, the heating temperature is 60°C, 70°C, 80°C, 90°C, 100°C, 110°C, 120°C, 130°C, or 139°C. A treatment duration of the devolatilization treatment ranges from 10 hours to 20 hours. For example, the treatment duration is 10 hours, 11 hours, 12 hours, 13 hours, 14 hours, 15 hours, 16 hours, 17 hours, 18 hours, 19 hours, or 20 hours. When the vacuum pressure, heating temperature, and treatment duration of the devolatilization treatment fall within the above-mentioned ranges, the devolatilization treatment can remove the impurities in the reaction solution more quickly and achieve an excellent separation effect between the impurities and the bis(fluorosulfonyl)imide metal compound. In this way, simultaneous removal of the bis(fluorosulfonyl)imide metal compound is avoided, thereby achieving the preparation of the bis(fluorosulfonyl)imide metal compound with high purity and high production efficiency. Moreover, the appropriate selection of the temperature and vacuum pressure of the devolatilization treatment results in an advantage of low equipment requirements. In a specific embodiment, the heating temperature ranges from 100°C to 135°C. For example, the heating temperature is 100°C, 105°C, 110°C, 115°C, 120°C, 125°C, 130°C, or 135°C.

In a specific embodiment, the molten reaction solution is obtained by reacting the bis(fluorosulfonyl)imide with the metal fluoride compound under a solvent-free condition. Specifically, no additional reaction solvent is added in the reaction between the bis(fluorosulfonyl)imide and the metal fluoride compound in the present disclosure. The bis(fluorosulfonyl)imide can not only serve as a reaction raw material but also provide a solvent environment for the reaction. As a result, the bis(fluorosulfonyl)imide can fully react with the metal compound to generate the bis(fluorosulfonyl)imide metal compound. The reaction between the bis(fluorosulfonyl)imide and the metal fluoride compound under the solvent-free condition can reduce impurities introduced when the raw materials are added and can mitigate impurity interference caused by unreacted raw material residues. Thus, the purity of the metal bis(fluorosulfonyl)imide liquid salt can be further enhanced. Meanwhile, the types of the raw materials used can be reduced, lowering the costs.

In a specific embodiment, the reaction between the bis(fluorosulfonyl)imide and the metal fluoride compound is performed at a reaction temperature ranging from 130°C to 140°C, and the reaction between the bis(fluorosulfonyl)imide and the metal fluoride compound is performed for a reaction duration ranging from 4 hours to 8 hours. For example, the reaction temperature is 130°C, 131°C, 132°C, 133°C, 134°C, 135°C, 136°C, 137°C, 138°C, 139°C, or 140°C, and the reaction duration is 4 hours, 4.5 hours, 5 hours, 5.5 hours, 6 hours, 6.5 hours, 7 hours, 7.5 hours, or 8 hours. When the reaction temperature and the reaction duration fall within the above-mentioned ranges, respectively, the bis(fluorosulfonyl)imide can fully react with the metal fluoride compound, facilitating the subsequent devolatilization treatment and resin deacidification. As a result, the impurities can be quickly removed from the reaction solution, thereby achieving the preparation of the metal bis(fluorosulfonyl)imide liquid salt with high purity.

In a specific embodiment, a molar ratio of the bis(fluorosulfonyl)imide to the metal fluoride compound is 1: (0.95 to 1.05). For example, the molar ratio is 1:0.95, 1:0.96, 1:0.97, 1:0.98, 1:0.99, 1:1, 1:1.01, 1:1.02, 1:1.03, 1:1.04, or 1:1.05. When the molar ratio of the bis(fluorosulfonyl)imide to the metal fluoride compound falls within the above-mentioned range, the bis(fluorosulfonyl)imide can react with the metal fluoride compound to generate the bis(fluorosulfonyl)imide metal compound, reducing unreacted bis(fluorosulfonyl)imide or metal fluoride compound residues in the post-reaction system. In this way, the subsequent devolatilization treatment and deacidification treatment using the resin can be facilitated. Moreover, an excessive amount of the metal fluoride compound, which would otherwise result in a failure of a first filtration treatment to completely remove the metal fluoride compound, can be avoided. Further, an excessive fluoride ion content caused by the metal fluoride compound residues can be prevented, and thus advantageously improving the purity of the metal bis(fluorosulfonyl)imide liquid salt and reducing the fluoride ion content. Meanwhile, waste of the raw materials can be avoided, saving the costs.

In a specific embodiment, said dissolving the bis(fluorosulfonyl)imide metal compound in the solvent is performed under the condition that the bis(fluorosulfonyl)imide metal compound is kept in a molten state. When the bis(fluorosulfonyl)imide metal compound is dissolved in the solvent while being kept in the molten state, the pulverization process otherwise required after the cooling and solidification of the bis(fluorosulfonyl)imide metal compound can be reduced, thereby simplifying the production process, shortening the production duration, and reducing the costs.

In a specific embodiment, the obtained bis(fluorosulfonyl)imide metal compound is mixed into a solvent while maintaining its temperature so as to keep the compound in a molten state during the aforementioned dissolution in the solvent. Specifically, the temperature of the bis(fluorosulfonyl)imide metal compound obtained through the devolatilization treatment is maintained to enable the bis(fluorosulfonyl)imide metal compound to be in the molten state, and then the bis(fluorosulfonyl)imide metal compound in the molten state is mixed into the solvent and dissolved in the solvent while being kept in the molten state to obtain the bis(fluorosulfonyl)imide metal compound solution. In this way, the bis(fluorosulfonyl)imide metal compound is kept in the molten state throughout the process, facilitating rapid dissolution of the bis(fluorosulfonyl)imide metal compound in the solvent. This prevents the agglomeration of the bis(fluorosulfonyl)imide metal compound upon cooling, avoiding difficulties in dissolving it into the solvent. Thus, the pulverization process can be omitted. Moreover, the production time can be shortened, and the costs can be lowered.

In a specific embodiment, the solvent is an electrolyte solvent. The electrolyte solvent includes at least one of dimethyl carbonate, diethyl carbonate, ethyl methyl carbonate, or ethylene carbonate; and a mass ratio of the bis(fluorosulfonyl)imide metal compound to the electrolyte solvent ranges from (59:141) to (61:139). When the electrolyte solvent is selected from the above-mentioned solvents, the bis(fluorosulfonyl)imide metal compound can be dissolved in the electrolyte solvent to form the bis(fluorosulfonyl)imide metal compound solution. Furthermore, the impurities in the bis(fluorosulfonyl)imide metal compound do not react with the electrolyte solvent, which avoids generation of by-products. When the mass ratio of the bis(fluorosulfonyl)imide metal compound to the electrolyte solvent falls within the above-mentioned range, an impurity content in the bis(fluorosulfonyl)imide metal compound solution falls within an appropriate range, facilitating the subsequent deacidification treatment using the resin and enhancing adsorption capability of the resin for the impurities. Thus, the deacidification effect of the deacidification treatment using the resin can be improved, thereby further enhancing the purity of the metal bis(fluorosulfonyl)imide liquid salt.

In a specific embodiment, the resin includes one of poly(4-vinylpyridine) resin, poly(N,N-dimethyl-p-styrene) resin, and poly(N,N-diethyl-p-styrene) resin; A/B ranges from 1% to 5%, where A represents a mass of the resin, and B represents a mass of the bis(fluorosulfonyl)imide metal compound. When the resin is selected from the above-mentioned resins, the resin can absorb the impurities in the bis(fluorosulfonyl)imide metal compound solution faster and more efficiently, improving the deacidification effect of the deacidification treatment using the resin, and thus enhancing the purity of the metal bis(fluorosulfonyl)imide liquid salt. When the mass ratio of the resin to the bis(fluorosulfonyl)imide metal compound falls within the above-mentioned range, it is beneficial for the resin to quickly adsorb the impurities in the bis(fluorosulfonyl)imide metal compound, which can avoid a problem of a poor deacidification effect caused by excessive impurity adsorption by the resin. Thus, the effect of the deacidification treatment using the resin can be improved, and the purity of the metal bis(fluorosulfonyl)imide liquid salt can be enhanced. As a result, the production costs are lowered.

In a specific embodiment, a turbidity of the reaction liquid is less than or equal to 100; or the EP1 acidity, calculated as an equivalent amount of hydrofluoric acid, of the reaction liquid is less than or equal to 100 ppm. When the molar ratio of the bis(fluorosulfonyl)imide to the metal fluoride compound is less than 1, the reaction solution includes an unreacted metal fluoride compound, which is a solid. In this case, a turbidity test is conducted on the reaction solution. When the molar ratio of the bis(fluorosulfonyl)imide to the metal fluoride compound is greater than 1, the reaction solution includes unreacted bis(fluorosulfonyl)imide. In this case, an acidity test is conducted on the reaction solution. When the turbidity or acidity of the reaction solution falls within the above-mentioned range, the bis(fluorosulfonyl)imide can react completely with the metal fluoride compound. In this way, the subsequent devolatilization treatment can be proceeded. Moreover, when the turbidity or acidity of the reaction solution is low, a difficulty in the subsequent devolatilization treatment and deacidification treatment using the resin can be reduced, enhancing the purity of the metal bis(fluorosulfonyl)imide liquid salt to a greater extent.

In a specific embodiment, the bis(fluorosulfonyl)imide includes: 99.93% by mass to 100% by mass of bis(fluorosulfonyl)imide; less than or equal to 200 ppm of sulfamate ions; less than or equal to 300 ppm of fluorosulfonate ions; less than or equal to 100 ppm of fluorosulfonamide; less than or equal to 50 ppm of chloride ions; and less than or equal to 50 ppm of fluoride ions. In a specific embodiment, the metal fluoride compound includes one of lithium fluoride, sodium fluoride, potassium fluoride, rubidium fluoride, cesium fluoride, and francium fluoride. In a specific embodiment, the metal fluoride compound includes: 99.84% by mass to 100% by mass of a metal fluoride compound; less than or equal to 1,000 ppm of a metal carbonate compound; and less than or equal to 600 ppm of moisture. When the bis(fluorosulfonyl)imide and the metal fluoride compound with the above-mentioned purities are selected for the reaction, the bis(fluorosulfonyl)imide and the metal fluoride compound contain fewer impurities, avoiding introduction of excessive impurities, and thus contributing to realize the high purity of the metal bis(fluorosulfonyl)imide liquid salt. Furthermore, the duration of the devolatilization treatment can be shortened, thereby improving production efficiency and saving the costs. Meanwhile, due to the chloride ions are mainly derived from the bis(fluorosulfonyl)imide, the reduced chloride ions content in the bis(fluorosulfonyl)imide can help realize preparation of a bis(fluorosulfonyl)imide liquid salt with a low chloride ions content.

The present disclosure can prepare a corresponding metal bis(fluorosulfonyl)imide liquid salt by selecting a specific metal fluoride compound. For example, lithium bis(fluorosulfonyl)imide, sodium bis(fluorosulfonyl)imide, potassium bis(fluorosulfonyl)imide, rubidium bis(fluorosulfonyl)imide, cesium bis(fluorosulfonyl)imide, and francium bis(fluorosulfonyl)imide may be prepared.

In a specific embodiment, the method further includes, prior to the deacidification treatment using the resin: performing a first filtration treatment on the bis(fluorosulfonyl)imide metal compound solution. In a specific embodiment, the method further includes, subsequent to the deacidification treatment using the resin: performing a second filtration treatment on the deacidified solution system. By performing the first filtration treatment on the bis(fluorosulfonyl)imide metal compound solution prior to the deacidification treatment using the resin, insoluble substances in the bis(fluorosulfonyl)imide metal compound solution can be removed, avoiding damage to the resin by the insoluble substances, which would otherwise lead to resin blockage or a poor deacidification effect. Thus, the purity of the metal bis(fluorosulfonyl)imide liquid salt can be enhanced. By performing the second filtration treatment subsequent to the deacidification treatment using the resin, insoluble substances that are not separated out through the first filtration treatment and insoluble substances that may be generated subsequent to the deacidification treatment using the resin can be removed, thereby enhancing the purity of the metal bis(fluorosulfonyl)imide liquid salt.

The present disclosure does not limit a pore size of a filter membrane used in the first filtration treatment and the second filtration treatment, which may be selected according to actual needs. For example, compared to the first filtration treatment, a filter membrane with a smaller pore size is selected for the second filtration treatment, which can better remove the insoluble substances in the system, thereby improving the purity of the metal bis(fluorosulfonyl)imide liquid salt to a greater extent.

The present disclosure also provides a metal bis(fluorosulfonyl)imide liquid salt. The metal bis(fluorosulfonyl)imide liquid salt is prepared by the above-mentioned preparation method. The metal bis(fluorosulfonyl)imide liquid salt includes impurities of sulfamate ions less than or equal to 100 ppm, fluorosulfonate ions less than or equal 300 ppm, and fluorosulfonamide less than or equal 10 ppm. The metal bis(fluorosulfonyl)imide liquid salt according to the present disclosure exhibits high purity, thereby facilitating its wide application in the battery field.

In a specific embodiment, the metal bis(fluorosulfonyl)imide liquid salt further includes chloride ions and fluoride ions as impurities. A content of the chloride ions in the metal bis(fluorosulfonyl)imide liquid salt is not greater than 5 ppm; and a content of the fluoride ions in the metal bis(fluorosulfonyl)imide liquid salt is not greater than 50 ppm. Exemplarily, during preparation, the metal bis(fluorosulfonyl)imide liquid salt with the fluoride ions not greater than 5 ppm and chloride ions not greater than 5 ppm can be prepared by controlling the molar ratio of the bis(fluorosulfonyl)imide to the metal fluoride compound and the purities of the bis(fluorosulfonyl)imide and the metal fluoride compound.

The present disclosure is further described in detail below through specific examples.

### Example 1

A method for preparing a lithium bis(fluorosulfonyl)imide liquid salt according to Example 1 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide (Guangdong Wengjiang Chemical Reagent Co., Ltd.) included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 80 ppm, fluorosulfonate ions at 150 ppm, fluorosulfonamide at 8 ppm, chloride ions at 3 ppm, and fluoride ions at 35 ppm.

A mass ratio of the lithium bis(fluorosulfonyl)imide to the electrolyte solvent was 60:140; and A/B was 2%, where A represented a mass of the resin, and B represented a mass of the lithium bis(fluorosulfonyl)imide.

### Example 2

A method for preparing a lithium bis(fluorosulfonyl)imide liquid salt according to Example 2 included the following steps.
1. Bis(fluorosulfonyl)imide reacted with lithium fluoride at a molar ratio of 1:1 and at a reaction temperature of 130°C until an EP1 acidity, calculated as an equivalent amount of hydrofluoric acid, of the reaction solution reached 67 ppm to obtain a molten reaction solution. Then, the reaction solution was subjected to a devolatilization treatment to obtain lithium bis(fluorosulfonyl)imide. A vacuum pressure of the devolatilization treatment was 0.8 kPa; a temperature of the devolatilization treatment was 120°C; and a duration of the devolatilization treatment was 15 hours. An EP1 acidity, calculated as an equivalent amount of hydrofluoric acid, of the lithium bis(fluorosulfonyl)imide was 0.5 ppm.

The bis(fluorosulfonyl)imide included impurities of sulfamate ions at 200 ppm, fluorosulfonate ions at 180 ppm, fluorosulfonamide at 50 ppm, chloride ions at 460 ppm, and fluoride ions at 390 ppm. The lithium fluoride included: lithium fluoride at 99.88% by mass, lithium carbonate at 800 ppm, and moisture at 400 ppm.

2. The lithium bis(fluorosulfonyl)imide maintained at 120°C was added to a solvent, diethyl carbonate, for dissolution, with a temperature of the dissolution system kept at 20°C during the dissolution, to obtain a lithium bis(fluorosulfonyl)imide solution. Then, the lithium bis(fluorosulfonyl)imide solution was subjected to a first filtration treatment, followed by a resin deacidification treatment using PED resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 100 ppm, fluorosulfonate ions at 250 ppm, fluorosulfonamide at 6 ppm, chloride ions at 4 ppm, and fluoride ions at 45 ppm.

A mass ratio of the lithium bis(fluorosulfonyl)imide to the electrolyte solvent was 60:140; and A/B was 2%.

### Example 3

A method for preparing a lithium bis(fluorosulfonyl)imide liquid salt according to Example 3 included the following steps.
1. Bis(fluorosulfonyl)imide reacted with lithium fluoride at a molar ratio of 1:1.05 and at a reaction temperature of 140°C until a turbidity of the reaction solution reached 100 to obtain a molten reaction solution. Then, the reaction solution was subjected to a devolatilization treatment to obtain lithium bis(fluorosulfonyl)imide. A vacuum pressure of the devolatilization treatment was 1 kPa; a temperature of the devolatilization treatment was 130°C; and a duration of the devolatilization treatment was 20 hours. An EP1 acidity, calculated as an equivalent amount of hydrofluoric acid, of the lithium bis(fluorosulfonyl)imide was 0.1 ppm.

The bis(fluorosulfonyl)imide included impurities of sulfamate ions at 150 ppm, fluorosulfonate ions at 280 ppm, fluorosulfonamide at 48 ppm, chloride ions at 320 ppm, and fluoride ions at 480 ppm. The lithium fluoride included: lithium fluoride at 99.89% by mass, lithium carbonate at 600 ppm, and moisture at 500 ppm.

2. The lithium bis(fluorosulfonyl)imide maintained at 130°C was added to a solvent, dimethyl carbonate, for dissolution, with a temperature of the dissolution system kept at 30°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 55 ppm, fluorosulfonate ions at 240 ppm, fluorosulfonamide at 10 ppm, chloride ions at 4 ppm, and fluoride ions at 32 ppm.

A mass ratio of the lithium bis(fluorosulfonyl)imide to the electrolyte solvent was 59:141; and A/B was 1%.

### Example 4

A method for preparing a lithium bis(fluorosulfonyl)imide liquid salt according to Example 4 included the following steps.
1. Bis(fluorosulfonyl)imide reacted with lithium fluoride at a molar ratio of 1:1.05 and at a reaction temperature of 140°C until a turbidity of the reaction solution reached 89 to obtain a molten reaction solution. Then, the reaction solution was subjected to a devolatilization treatment to obtain lithium bis(fluorosulfonyl)imide. A vacuum pressure of the devolatilization treatment was 0.1 kPa; a temperature of the devolatilization treatment was 120°C; and a duration of the devolatilization treatment was 10 hours. An EP1 acidity, calculated as an equivalent amount of hydrofluoric acid, of the lithium bis(fluorosulfonyl)imide was 0.1 ppm.

The bis(fluorosulfonyl)imide included impurities of sulfamate ions at 88 ppm, fluorosulfonate ions at 56 ppm, fluorosulfonamide at 22 ppm, chloride ions at 5 ppm, and fluoride ions at 12 ppm. The lithium fluoride included: lithium fluoride at 99.928% by mass, lithium carbonate at 400 ppm, and moisture at 320 ppm.

2. The lithium bis(fluorosulfonyl)imide maintained at 130°C was added to a solvent, ethyl methyl carbonate, for dissolution, with a temperature of the dissolution system kept at 40°C during the dissolution, to obtain a lithium bis(fluorosulfonyl)imide solution. Then, the lithium bis(fluorosulfonyl)imide solution was subjected to a first filtration treatment, followed by a resin deacidification treatment using PEB resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 45 ppm, fluorosulfonate ions at 124 ppm, fluorosulfonamide at 7 ppm, chloride ions at 1 ppm, and fluoride ions at 22 ppm.

A mass ratio of the lithium bis(fluorosulfonyl)imide to the electrolyte solvent was 60:140; and A/B was 5%.

### Example 5

A method for preparing a lithium bis(fluorosulfonyl)imide liquid salt according to Example 5 included the following steps.
1. Bis(fluorosulfonyl)imide reacted with lithium fluoride at a molar ratio of 1:1 and at a reaction temperature of 130°C until an EP1 acidity, calculated as an equivalent amount of hydrofluoric acid, of the reaction solution reached 92 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 65 ppm, fluorosulfonate ions at 124 ppm, fluorosulfonamide at 5 ppm, chloride ions at 3 ppm, and fluoride ions at 17 ppm.

A mass ratio of the lithium bis(fluorosulfonyl)imide to the electrolyte solvent was 60:140; and A/B was 2%.

### Example 6

A method for preparing a lithium bis(fluorosulfonyl)imide liquid salt according to Example 6 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 78 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.89% by mass, lithium carbonate at 600 ppm, and moisture at 500 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 88 ppm, fluorosulfonate ions at 145 ppm, fluorosulfonamide at 7 ppm, chloride ions at 3 ppm, and fluoride ions at 45 ppm.

A mass ratio of the lithium bis(fluorosulfonyl)imide to the electrolyte solvent was 60:140; and A/B was 2%.

### Example 7

A method for preparing a lithium bis(fluorosulfonyl)imide liquid salt according to Example 7 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 55 ppm, fluorosulfonate ions at 188 ppm, fluorosulfonamide at 4 ppm, chloride ions at 2.5 ppm, and fluoride ions at 37 ppm.

A mass ratio of the lithium bis(fluorosulfonyl)imide to the electrolyte solvent was 61:139; and A/B was 2%.

### Example 8

A method for preparing a lithium bis(fluorosulfonyl)imide liquid salt according to Example 8 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 47 ppm, fluorosulfonate ions at 120 ppm, fluorosulfonamide at 4 ppm, chloride ions at 3.7 ppm, and fluoride ions at 37 ppm.

A mass ratio of the lithium bis(fluorosulfonyl)imide to the electrolyte solvent was 60:140; and A/B was 4%.

### Example 9

A method for preparing a lithium bis(fluorosulfonyl)imide liquid salt according to Example 9 included the following steps.
1. Bis(fluorosulfonyl)imide reacted with lithium fluoride at a molar ratio of 1:1.05 and at a reaction temperature of 140°C until a turbidity of the reaction solution reached 89 to obtain a molten reaction solution. Then, the reaction solution was subjected to a devolatilization treatment to obtain lithium bis(fluorosulfonyl)imide. A vacuum pressure of the devolatilization treatment was 0.1 kPa; a temperature of the devolatilization treatment was 120°C; and a duration of the devolatilization treatment was 10 hours. An EP1 acidity, calculated as an equivalent amount of hydrofluoric acid, of the lithium bis(fluorosulfonyl)imide was 0.1 ppm.

The bis(fluorosulfonyl)imide included impurities of sulfamate ions at 88 ppm, fluorosulfonate ions at 56 ppm, fluorosulfonamide at 22 ppm, chloride ions at 5 ppm, and fluoride ions at 12 ppm. The lithium fluoride included: lithium fluoride at 99.928% by mass, lithium carbonate at 400 ppm, and moisture at 320 ppm.

2. The lithium bis(fluorosulfonyl)imide maintained at 130°C was added to a solvent, ethyl methyl carbonate, for dissolution, with a temperature of the dissolution system kept at 40°C during the dissolution, to obtain a lithium bis(fluorosulfonyl)imide solution. Then, the lithium bis(fluorosulfonyl)imide solution was subjected to a first filtration treatment, followed by a resin deacidification treatment using PEB resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 67 ppm, fluorosulfonate ions at 141 ppm, fluorosulfonamide at 5 ppm, chloride ions at 3 ppm, and fluoride ions at 37 ppm.

A mass ratio of the lithium bis(fluorosulfonyl)imide to the electrolyte solvent was 61:139; and A/B was 5%.

### Example 10

A method for preparing a lithium bis(fluorosulfonyl)imide liquid salt according to Example 10 included the following steps.
1. Bis(fluorosulfonyl)imide reacted with lithium fluoride at a molar ratio of 1:1.05 and at a reaction temperature of 140°C until a turbidity of the reaction solution reached 89 to obtain a molten reaction solution. Then, the reaction solution was subjected to a devolatilization treatment to obtain lithium bis(fluorosulfonyl)imide. A vacuum pressure of the devolatilization treatment was 0.1 kPa; a temperature of the devolatilization treatment was 120°C; and a duration of the devolatilization treatment was 10 hours. An EP1 acidity, calculated as an equivalent amount of hydrofluoric acid, of the lithium bis(fluorosulfonyl)imide was 0.1 ppm.

The bis(fluorosulfonyl)imide included impurities of sulfamate ions at 88 ppm, fluorosulfonate ions at 56 ppm, fluorosulfonamide at 22 ppm, chloride ions at 5 ppm, and fluoride ions at 12 ppm. The lithium fluoride included: lithium fluoride at 99.928% by mass, lithium carbonate at 400 ppm, and moisture at 320 ppm.

2. The lithium bis(fluorosulfonyl)imide maintained at 130°C was added to a solvent, ethyl methyl carbonate, for dissolution, with a temperature of the dissolution system kept at 40°C during the dissolution, to obtain a lithium bis(fluorosulfonyl)imide solution. Then, the lithium bis(fluorosulfonyl)imide solution was subjected to a first filtration treatment, followed by a resin deacidification treatment using PEB resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 67 ppm, fluorosulfonate ions at 130 ppm, fluorosulfonamide at 7 ppm, chloride ions at 2.4 ppm, and fluoride ions at 18 ppm.

A mass ratio of the lithium bis(fluorosulfonyl)imide to the electrolyte solvent was 60:140; and A/B was 3%.

### Example 11

A method for preparing a lithium bis(fluorosulfonyl)imide liquid salt according to Example 11 included the following steps.
1. Bis(fluorosulfonyl)imide reacted with lithium fluoride at a molar ratio of 1:1.1 and at a reaction temperature of 130°C until a turbidity of the reaction solution reached 150 to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.08 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 24 ppm, fluorosulfonate ions at 147 ppm, fluorosulfonamide at 8 ppm, chloride ions at 3 ppm, and fluoride ions at 89 ppm.

A mass ratio of the lithium bis(fluorosulfonyl)imide to the electrolyte solvent was 60:140; and A/B was 2%.

### Example 12

A method for preparing a lithium bis(fluorosulfonyl)imide liquid salt according to Example 12 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 97 ppm, fluorosulfonate ions at 280 ppm, fluorosulfonamide at 8 ppm, chloride ions at 4 ppm, and fluoride ions at 46 ppm.

A mass ratio of the lithium bis(fluorosulfonyl)imide to the electrolyte solvent was 50:150; and A/B was 2%.

### Example 13

A method for preparing a lithium bis(fluorosulfonyl)imide liquid salt according to Example 13 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 88 ppm, fluorosulfonate ions at 255 ppm, fluorosulfonamide at 9 ppm, chloride ions at 4.5 ppm, and fluoride ions at 47 ppm.

A mass ratio of the lithium bis(fluorosulfonyl)imide to the electrolyte solvent was 60:140; and A/B was 0.5%.

### Example 14

A method for preparing a lithium bis(fluorosulfonyl)imide liquid salt according to Example 14 included the following steps.
1. Bis(fluorosulfonyl)imide reacted with lithium fluoride at a molar ratio of 1:1.05 and at a reaction temperature of 140°C until a turbidity of the reaction solution reached 89 to obtain a molten reaction solution. Then, the reaction solution was subjected to a devolatilization treatment to obtain lithium bis(fluorosulfonyl)imide. A vacuum pressure of the devolatilization treatment was 0.1 kPa; a temperature of the devolatilization treatment was 120°C; and a duration of the devolatilization treatment was 10 hours. An EP1 acidity, calculated as an equivalent amount of hydrofluoric acid, of the lithium bis(fluorosulfonyl)imide was 0.1 ppm.

The bis(fluorosulfonyl)imide included impurities of sulfamate ions at 88 ppm, fluorosulfonate ions at 56 ppm, fluorosulfonamide at 22 ppm, chloride ions at 5 ppm, and fluoride ions at 12 ppm. The lithium fluoride included: lithium fluoride at 99.928% by mass, lithium carbonate at 400 ppm, and moisture at 320 ppm.

2. The lithium bis(fluorosulfonyl)imide maintained at 130°C was added to a solvent, ethyl methyl carbonate, for dissolution, with a temperature of the dissolution system kept at 40°C during the dissolution, to obtain a lithium bis(fluorosulfonyl)imide solution. Then, the lithium bis(fluorosulfonyl)imide solution was subjected to a first filtration treatment, followed by a resin deacidification treatment using PEB resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 91 ppm, fluorosulfonate ions at 289 ppm, fluorosulfonamide at 10 ppm, chloride ions at 3 ppm, and fluoride ions at 57 ppm.

A mass ratio of the lithium bis(fluorosulfonyl)imide to the electrolyte solvent was 70:130; and A/B was 5%.

### Example 15

A method for preparing a lithium bis(fluorosulfonyl)imide liquid salt according to Example 15 included the following steps.
1. Bis(fluorosulfonyl)imide reacted with lithium fluoride at a molar ratio of 1:1.05 and at a reaction temperature of 140°C until a turbidity of the reaction solution reached 89 to obtain a molten reaction solution. Then, the reaction solution was subjected to a devolatilization treatment to obtain lithium bis(fluorosulfonyl)imide. A vacuum pressure of the devolatilization treatment was 0.1 kPa; a temperature of the devolatilization treatment was 120°C; and a duration of the devolatilization treatment was 10 hours. An EP1 acidity, calculated as an equivalent amount of hydrofluoric acid, of the lithium bis(fluorosulfonyl)imide was 0.1 ppm.

The bis(fluorosulfonyl)imide included impurities of sulfamate ions at 88 ppm, fluorosulfonate ions at 56 ppm, fluorosulfonamide at 22 ppm, chloride ions at 5 ppm, and fluoride ions at 12 ppm. The lithium fluoride included: lithium fluoride at 99.928% by mass, lithium carbonate at 400 ppm, and moisture at 320 ppm.

2. The lithium bis(fluorosulfonyl)imide maintained at 130°C was added to a solvent, ethyl methyl carbonate, for dissolution, with a temperature of the dissolution system kept at 40°C during the dissolution, to obtain a lithium bis(fluorosulfonyl)imide solution. Then, the lithium bis(fluorosulfonyl)imide solution was subjected to a first filtration treatment, followed by a resin deacidification treatment using PEB resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 88 ppm, fluorosulfonate ions at 213 ppm, fluorosulfonamide at 7 ppm, chloride ions at 2.5 ppm, and fluoride ions at 44 ppm.

A mass ratio of the lithium bis(fluorosulfonyl)imide to the electrolyte solvent was 60:140; and A/B was 0.5%.

### Example 16

A method for preparing a lithium bis(fluorosulfonyl)imide liquid salt according to Example 16 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 74 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.3 ppm.

The bis(fluorosulfonyl)imide included impurities of sulfamate ions at 220 ppm, fluorosulfonate ions at 180 ppm, fluorosulfonamide at 150 ppm, chloride ions at 70 ppm, and fluoride ions at 70 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 100 ppm, fluorosulfonate ions at 278 ppm, fluorosulfonamide at 8 ppm, chloride ions at 6 ppm, and fluoride ions at 45 ppm.

A mass ratio of the lithium bis(fluorosulfonyl)imide to the electrolyte solvent was 60:140; and A/B was 2%.

### Example 17

A method for preparing a lithium bis(fluorosulfonyl)imide liquid salt according to Example 17 included the following steps.
1. Bis(fluorosulfonyl)imide reacted with lithium fluoride at a molar ratio of 1:1.05 and at a reaction temperature of 140°C until a turbidity of the reaction solution reached 89 to obtain a molten reaction solution. Then, the reaction solution was subjected to a devolatilization treatment to obtain lithium bis(fluorosulfonyl)imide. A vacuum pressure of the devolatilization treatment was 0.1 kPa; a temperature of the devolatilization treatment was 120°C; and a duration of the devolatilization treatment was 10 hours. An EP1 acidity, calculated as an equivalent amount of hydrofluoric acid, of the lithium bis(fluorosulfonyl)imide was 0.1 ppm.

The bis(fluorosulfonyl)imide included impurities of sulfamate ions at 88 ppm, fluorosulfonate ions at 56 ppm, fluorosulfonamide at 22 ppm, chloride ions at 5 ppm, and fluoride ions at 12 ppm. The lithium fluoride included: lithium fluoride at 99.8% by mass, lithium carbonate at 1,200 ppm, and moisture at 800 ppm.

2. The lithium bis(fluorosulfonyl)imide maintained at 130°C was added to a solvent, ethyl methyl carbonate, for dissolution, with a temperature of the dissolution system kept at 40°C during the dissolution, to obtain a lithium bis(fluorosulfonyl)imide solution. Then, the lithium bis(fluorosulfonyl)imide solution was subjected to a first filtration treatment, followed by a resin deacidification treatment using PEB resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 97 ppm, fluorosulfonate ions at 214 ppm, fluorosulfonamide at 10 ppm, chloride ions at 1.4 ppm, and fluoride ions at 18 ppm.

A mass ratio of the lithium bis(fluorosulfonyl)imide to the electrolyte solvent was 60:140; and A/B was 5%.

### Example 18

A method for preparing a sodium bis(fluorosulfonyl)imide liquid salt according to Example 18 included the following steps.
1. Bis(fluorosulfonyl)imide reacted with sodium fluoride at a molar ratio of 1:0.95 and at a reaction temperature of 130°C until an EP1 acidity, calculated as an equivalent amount of hydrofluoric acid, of the reaction solution reached 80 ppm to obtain a molten reaction solution. Then, the reaction solution was subjected to a devolatilization treatment to obtain sodium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the sodium bis(fluorosulfonyl)imide was 0.5 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The sodium fluoride included: sodium fluoride at 99.9% by mass, sodium carbonate at 600 ppm, and moisture at 400 ppm.

2. The sodium bis(fluorosulfonyl)imide maintained at 120°C was added to a solvent, ethyl methyl carbonate, with a temperature of the dissolution system kept at 10°C during the dissolution, to obtain a sodium bis(fluorosulfonyl)imide solution. Then, the sodium bis(fluorosulfonyl)imide solution was subjected to a first filtration treatment, followed by a resin deacidification treatment using PEP resin. Finally, a second filtration treatment was performed on the deacidified solution system to obtain the sodium bis(fluorosulfonyl)imide liquid salt. The sodium bis(fluorosulfonyl)imide liquid salt included impurities of sulfamate ions at 60 ppm, fluorosulfonate ions at 122 ppm, fluorosulfonamide at 7 ppm, chloride ions at 3 ppm, and fluoride ions at 33 ppm.

A mass ratio of the sodium bis(fluorosulfonyl)imide to the electrolyte solvent was 60:140; and A/B was 2%.

### Example 19

A method for preparing a potassium bis(fluorosulfonyl)imide liquid salt according to Example 19 included the following steps.
1. Bis(fluorosulfonyl)imide reacted with potassium fluoride at a molar ratio of 1:0.95 and at a reaction temperature of 130°C until an EP1 acidity, calculated as an equivalent amount of hydrofluoric acid, of the reaction solution reached 80 ppm to obtain a molten reaction solution. Then, the reaction solution was subjected to a devolatilization treatment to obtain potassium bis(fluorosulfonyl)imide. A vacuum pressure of the devolatilization treatment was 0.5 kPa; a temperature of the devolatilization treatment was 120°C; and a duration of the devolatilization treatment was 12 hours.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The potassium fluoride included: potassium fluoride at 99.9% by mass, potassium carbonate at 600 ppm, and moisture at 400 ppm.

2. The potassium bis(fluorosulfonyl)imide maintained at 120°C was added to a solvent, ethyl methyl carbonate, with a temperature of the dissolution system kept at 10°C during the dissolution, to obtain a potassium bis(fluorosulfonyl)imide solution. Then, the potassium bis(fluorosulfonyl)imide solution was subjected to a first filtration treatment, followed by a resin deacidification treatment using PEP resin. Finally, a second filtration treatment was performed on the deacidified solution system to obtain the potassium bis(fluorosulfonyl)imide liquid salt. The potassium bis(fluorosulfonyl)imide liquid salt included impurities of sulfamate ions at 88 ppm, fluorosulfonate ions at 247 ppm, fluorosulfonamide at 6 ppm, chloride ions at 4 ppm, and fluoride ions at 34 ppm.

A mass ratio of the potassium bis(fluorosulfonyl)imide to the electrolyte solvent was 60:140; and A/B was 2%.

### Example 20

A method for preparing a potassium bis(fluorosulfonyl)imide liquid salt according to Example 20 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 135°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide (Guangdong Wengjiang Chemical Reagent Co., Ltd.) included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 78 ppm, fluorosulfonate ions at 161 ppm, fluorosulfonamide at 7 ppm, chloride ions at 4 ppm, and fluoride ions at 44 ppm.

A mass ratio of the lithium bis(fluorosulfonyl)imide to the electrolyte solvent was 60:140; and A/B was 2%, where A represented a mass of the resin, and B represented a mass of the lithium bis(fluorosulfonyl)imide.

### Example 21

A method for preparing a potassium bis(fluorosulfonyl)imide liquid salt according to Example 21 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 100°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide (Guangdong Wengjiang Chemical Reagent Co., Ltd.) included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 89 ppm, fluorosulfonate ions at 198 ppm, fluorosulfonamide at 7 ppm, chloride ions at 4 ppm, and fluoride ions at 38 ppm.

A mass ratio of the lithium bis(fluorosulfonyl)imide to the electrolyte solvent was 60:140; and A/B was 2%, where A represented a mass of the resin, and B represented a mass of lithium bis(fluorosulfonyl)imide.

### Example 22

A method for preparing a potassium bis(fluorosulfonyl)imide liquid salt according to Example 22 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 80°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide (Guangdong Wengjiang Chemical Reagent Co., Ltd.) included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 88 ppm, fluorosulfonate ions at 243 ppm, fluorosulfonamide at 8 ppm, chloride ions at 3 ppm, and fluoride ions at 41 ppm.

A mass ratio of the lithium bis(fluorosulfonyl)imide to the electrolyte solvent was 60:140; and A/B was 2%, where A represented a mass of the resin, and B represented a mass of the lithium bis(fluorosulfonyl)imide.

### Example 23

A method for preparing a potassium bis(fluorosulfonyl)imide liquid salt according to Example 23 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 60°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide (Guangdong Wengjiang Chemical Reagent Co., Ltd.) included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 90 ppm, fluorosulfonate ions at 294 ppm, fluorosulfonamide at 8 ppm, chloride ions at 4 ppm, and fluoride ions at 49 ppm.

A mass ratio of the lithium bis(fluorosulfonyl)imide to the electrolyte solvent was 60:140; and A/B was 2%, where A represented a mass of resin, and B represented a mass of lithium bis(fluorosulfonyl)imide.

### Comparative Example 1

A method for preparing a lithium bis(fluorosulfonyl)imide liquid salt according to Comparative Example 1 included the following steps.
1. Bis(fluorosulfonyl)imide reacted with lithium fluoride at a molar ratio of 1:1 and at a reaction temperature of 130°C until an EP1 acidity, calculated as an equivalent amount of hydrofluoric acid, of the reaction solution reached 92 ppm to obtain a molten reaction solution.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The reaction solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 1,450 ppm, fluorosulfonate ions at 3,657 ppm, fluorosulfonamide at 77 ppm, chloride ions at 145 ppm, and fluoride ions at 889 ppm.

A mass ratio of the lithium bis(fluorosulfonyl)imide to the electrolyte solvent was 60:140; and A/B was 2%.

During the resin deacidification treatment, the PEP resin had to be replaced after a single use due to the excessively high impurity content in the reaction solution.

### Comparative Example 2

A method for preparing a lithium bis(fluorosulfonyl)imide liquid salt according to Comparative Example 2 included the following steps.
1. Bis(fluorosulfonyl)imide reacted with lithium fluoride at a molar ratio of 1:1 and at a reaction temperature of 130°C until an EP1 acidity, calculated as an equivalent amount of hydrofluoric acid, of the reaction solution reached 92 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.5 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to two filtration treatments to obtain the lithium bis(fluorosulfonyl)imide liquid salt. The lithium bis(fluorosulfonyl)imide liquid salt included impurities of sulfamate ions at 148 ppm, fluorosulfonate ions at 347 ppm, fluorosulfonamide at 5 ppm, chloride ions at 3 ppm, and fluoride ions at 266 ppm.

A mass ratio of the lithium bis(fluorosulfonyl)imide to the electrolyte solvent was 60:140.

### Comparative Example 3

A method for preparing lithium bis(fluorosulfonyl)imide according to Comparative Example 3 included the following steps.
1. Under a nitrogen atmosphere, sulfamic acid, chlorosulfonic acid, and thionyl chloride at a molar ratio of 1:1.3:2.3 were added to a reaction kettle, stirred thoroughly for uniform dispersion, and then heated to 120°C to react for 120 minutes. After the reaction was completed, low-boiling compounds were removed through atmospheric distillation, followed by reduced pressure distillation. The fraction at 112°C to 114°C/2mm Hg was collected and condensed to obtain HClSI.
2. HClSI was introduced into a reactor, and HF gas was passed through the reactor at 90°C until a molar ratio of HF to HClSI reached 2.25:1. The mixture reacted at 90°C for 8 hours and then was cooled to room temperature. Nitrogen gas was purged into the reactor for 3 hours to remove the mixed gas of HCl and HF to obtain bis(fluorosulfonyl)imide. The bis(fluorosulfonyl)imide was mixed with NaCl at a mass ratio of 100:3 to react at 70°C for 3 hours, and nitrogen gas was then purged into the reactor for 0.5 hours to remove HCl gas. The obtained product was subjected to reduced pressure distillation at -0.05MPa and 100°C for 2 hours, and the fraction was collected to obtain HFSI.
3. HFSI was added to the reaction kettle, and LiF was slowly added to the reaction kettle under sealed and stirred conditions until a molar ratio of HFSI to LiF reached 1.05:1. The mixture reacted at 145°C for 6 hours to obtain LiFSI. The crystallized LiFSI was dissolved into a solvent, ethyl methyl carbonate (EMC), to obtain an EMC solution of LiFSI. Tests via ion chromatography and fluorine-19 nuclear magnetic resonance spectroscopy showed that the lithium bis(fluorosulfonyl)imide included impurities of sulfamate ions at 4599 ppm, fluorosulfonate ions at 22,110 ppm, fluorosulfonamide at 124 ppm, chloride ions at 518 ppm, and fluoride ions at 247 ppm.

### Comparative Example 4

A method for preparing lithium bis(fluorosulfonyl)imide liquid salt according to Comparative Example 4 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 200 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 12 hours. An EP1 acidity, calculated as an equivalent amount of hydrofluoric acid, of the lithium bis(fluorosulfonyl)imide was 0.6 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 150 ppm, fluorosulfonate ions at 581 ppm, fluorosulfonamide at 8 ppm, chloride ions at 3.4 ppm, and fluoride ions at 267 ppm.

A mass ratio of the lithium bis(fluorosulfonyl)imide to the electrolyte solvent was 60:140; and A/B was 2%.

### Comparative Example 5

A method for preparing a lithium bis(fluorosulfonyl)imide liquid salt according to Comparative Example 5 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 1.5 kPa; a temperature of the devolatilization treatment was 120°C; and a duration of the devolatilization treatment was 10 hours. An EP1 acidity, calculated as an equivalent amount of hydrofluoric acid, of the lithium bis(fluorosulfonyl)imide was 34 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 214 ppm, fluorosulfonate ions at 547 ppm, fluorosulfonamide at 5 ppm, chloride ions at 3.8 ppm, and fluoride ions at 145 ppm.

A mass ratio of the lithium bis(fluorosulfonyl)imide to the electrolyte solvent was 60:140; and A/B was 2%.

### Comparative Example 6

A method for preparing a lithium bis(fluorosulfonyl)imide liquid salt according to Comparative Example 6 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.5 kPa; a temperature of the devolatilization treatment was 120°C; and a duration of the devolatilization treatment was 8 hours. An EP1 acidity, calculated as an equivalent amount of hydrofluoric acid, of the lithium bis(fluorosulfonyl)imide was 8 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 314 ppm, fluorosulfonate ions at 648 ppm, fluorosulfonamide at 11 ppm, chloride ions at 4 ppm, and fluoride ions at 245 ppm.

A mass ratio of the lithium bis(fluorosulfonyl)imide to the electrolyte solvent was 60:140; and A/B was 2%.

### Comparative Example 7

A method for preparing a lithium bis(fluorosulfonyl)imide liquid salt according to Comparative Example 7 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.1 kPa; a temperature of the devolatilization treatment was 140°C; and a duration of the devolatilization treatment was 10 hours. An EP1 acidity, calculated as an equivalent amount of hydrofluoric acid, of the lithium bis(fluorosulfonyl)imide was 0.2 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a first filtration treatment, followed by a resin deacidification treatment using PEP resin. Finally, a second filtration treatment was performed on the deacidified solution system to obtain the lithium bis(fluorosulfonyl)imide liquid salt. The lithium bis(fluorosulfonyl)imide liquid salt included impurities of sulfamate ions at 78 ppm, fluorosulfonate ions at 1,891 ppm, fluorosulfonamide at 7 ppm, chloride ions at 3.4 ppm, and fluoride ions at 36 ppm.

A mass ratio of the lithium bis(fluorosulfonyl)imide to the electrolyte solvent was 60:140; and A/B was 2%.

### Comparative Example 8

A method for preparing a lithium bis(fluorosulfonyl)imide liquid salt according to Comparative Example 8 included the following steps.
1. Bis(fluorosulfonyl)imide reacted with lithium fluoride at a molar ratio of 1:0.95 and at a reaction temperature of 130°C until an EP1 acidity, calculated as an equivalent amount of hydrofluoric acid, of the reaction solution reached 88 ppm to obtain a molten reaction solution. Then, the reaction solution was subjected to a devolatilization treatment to obtain lithium bis(fluorosulfonyl)imide. A vacuum pressure of the devolatilization treatment was 0.1 kPa; a temperature of the devolatilization treatment was 145°C; and a duration of the devolatilization treatment was 10 hours. An EP1 acidity, calculated as an equivalent amount of hydrofluoric acid, of the lithium bis(fluorosulfonyl)imide was 0.2 ppm.

The bis(fluorosulfonyl)imide included impurities of sulfamate ions at 180 ppm, fluorosulfonate ions at 150 ppm, fluorosulfonamide at 44 ppm, chloride ions at 37 ppm, and fluoride ions at 25 ppm. The lithium fluoride included: lithium fluoride at 99.84% by mass, lithium carbonate at 1,000 ppm, and moisture at 600 ppm.

2. The lithium bis(fluorosulfonyl)imide maintained at 120°C was added to a solvent, ethyl methyl carbonate, for dissolution, with a temperature of the dissolution system kept at 10°C during the dissolution, to obtain a lithium bis(fluorosulfonyl)imide solution. Then, the lithium bis(fluorosulfonyl)imide solution was subjected to a resin deacidification treatment using PEP resin to obtain the lithium bis(fluorosulfonyl)imide liquid salt. The lithium bis(fluorosulfonyl)imide liquid salt included impurities of sulfamate ions at 78 ppm, fluorosulfonate ions at 1,289 ppm, fluorosulfonamide at 6 ppm, chloride ions at 4 ppm, and fluoride ions at 49 ppm.

A mass ratio of the lithium bis(fluorosulfonyl)imide to the electrolyte solvent was 60:140; and A/B was 2%.

Based on the comparison between Example 1 to Example 4 and Example 11, when the molar ratio of the bis(fluorosulfonyl)imide to the lithium fluoride was in the range of 1:(0.95 to 1.05), bis(fluorosulfonyl)imide can fully react with lithium fluoride, and correspondingly, the turbidity of the molten reaction solution was less than or equal to 100, or the acidity of the molten reaction solution was less than or equal to 100 ppm, thereby reducing the fluoride ion content in the lithium bis(fluorosulfonyl)imide liquid salt.

Based on the comparison between Example 1, Example 7, and Example 12 as well as the comparison between Example 4, Example 9, and Example 14, when the mass ratio of the lithium bis(fluorosulfonyl)imide to the electrolyte solvent ranged from (59:141) to (61:139), the impurity content in the lithium bis(fluorosulfonyl)imide liquid salt can be controlled within a limited range.

Based on the comparison between Example 1, Example 8, and Example 13 as well as the comparison between Example 4, Example 10, and Example 15, when the mass ratio of the resin to the bis(fluorosulfonyl)imide metal compound fell in the range of 1% to 5%, the resin can fully absorb the impurities in the lithium bis(fluorosulfonyl)imide liquid salt, achieving high purity of the lithium bis(fluorosulfonyl)imide liquid salt.

Based on the comparison between Example 1, Example 6, Example 16, and Example 17, the impurity content in the prepared lithium bis(fluorosulfonyl)imide liquid salt decreased as the purity of the bis(fluorosulfonyl)imide or lithium fluoride increased.

Based on the comparison between Example 1, Example 20 to Example 23, and Comparative Example 7 to Comparative Example 8, when the temperature of the devolatilization treatment was higher than 140°C, the lithium bis(fluorosulfonyl)imide can undergo a condensation side reaction to generate lithium fluorosulfonate by-products, resulting in an excessively high fluorosulfonate ion content in the lithium bis(fluorosulfonyl)imide liquid salt.

Based on Example 19, the method for preparing the metal bis(fluorosulfonyl)imide liquid salt according to the present disclosure is also applicable to the preparation of a potassium bis(fluorosulfonyl)imide liquid salt, which is beneficial to preparation of various metal bis(fluorosulfonyl)imide liquid salts.

Based on the comparison between Example 1 and Comparative Example 1 to Comparative Example 3, the impurities such as sulfamate ions, fluorosulfonate ions, fluorosulfonamide, chloride ions, and fluoride ions in the lithium bis(fluorosulfonyl)imide liquid salt can be effectively removed through the devolatilization treatment and the deacidification treatment using the resin.

Based on the comparison between Example 1 and Comparative Example 4 to Comparative Example 6, if most of the acidic substances in the reaction solution were not removed during the devolatilization treatment, resulting in the acidity of the reaction solution higher than 0.5 ppm, a subsequent resin treatment can still remove the acidic substances in the reaction solution. However, this may lead to waste of the resin, necessitating frequent replacement of the resin, and thus increasing preparation and time costs of the lithium bis(fluorosulfonyl)imide liquid salt. Therefore, by first utilizing the devolatilization treatment to quickly remove most of the acidic substances in the molten reaction solution and then using the resin to quickly remove the remaining acidic substances, the production process can be simplified, the production duration can be shortened, and the production cost can be reduced.

In summary, for the method for preparing the metal bis(fluorosulfonyl)imide liquid salt according to the present disclosure, the metal bis(fluorosulfonyl)imide liquid salt with high purity can be prepared by controlling the devolatilization treatment and the deacidification treatment using the resin. Meanwhile, the method provides advantages such as cost savings, a simple process, and a convenient operation.

At last, it should be noted that the above embodiments are only used to illustrate, rather than to limit, the technical solutions of the present disclosure. Although the present disclosure has been described in detail with reference to the above embodiments, those skilled in the art should understand that modifications may be made to the technical solutions described in the above embodiments, or equivalent replacements may be made to some or all of the technical features of the technical solutions described in the above embodiments. However, these modifications or replacements do not cause the essence of corresponding technical solutions to deviate from the scope of the technical solutions of the embodiments of the present disclosure.

## Claims

1. A method for preparing a metal bis(fluorosulfonyl)imide liquid salt, the method comprising:
reacting bis(fluorosulfonyl)imide with a metal fluoride compound, to obtain a molten reaction solution; and
performing a devolatilization treatment on the reaction solution until an EP1 acidity, calculated as an equivalent amount of hydrofluoric acid, is less than or equal to 0.5 ppm, to obtain a bis(fluorosulfonyl)imide metal compound, and
dissolving the bis(fluorosulfonyl)imide metal compound in a solvent, and performing a deacidification treatment using a resin on the bis(fluorosulfonyl)imide metal compound solution, to obtain the metal bis(fluorosulfonyl)imide liquid salt,
wherein a heating temperature of the devolatilization treatment is below 140°C.

2. The method for preparing the metal bis(fluorosulfonyl)imide liquid salt according to claim 1, wherein:
a vacuum pressure of the devolatilization treatment ranges from 1 kPa to 0.1 kPa;
the heating temperature of the devolatilization treatment is not below 60°C; and
a treatment duration of the devolatilization treatment ranges from 10 hours to 20 hours.

3. The method for preparing the metal bis(fluorosulfonyl)imide liquid salt according to claim 1 or 2, wherein the heating temperature ranges from 100°C to 135°C.

4. The method for preparing the metal bis(fluorosulfonyl)imide liquid salt according to any one of claims 1 to 3, wherein said dissolving the bis(fluorosulfonyl)imide metal compound in the solvent is performed under the condition that the bis(fluorosulfonyl)imide metal compound is kept in a molten state.

5. The method for preparing the metal bis(fluorosulfonyl)imide liquid salt according to claim 4, wherein said dissolving the bis(fluorosulfonyl)imide metal compound in the solvent is performed under the condition that the bis(fluorosulfonyl)imide metal compound is kept in the molten state by maintaining a temperature of the obtained bis(fluorosulfonyl)imide metal compound and mixing the obtained bis(fluorosulfonyl)imide metal compound into the solvent.

6. The method for preparing the metal bis(fluorosulfonyl)imide liquid salt according to any one of claims 1 to 5, wherein the solvent is an electrolyte solvent, wherein:
the electrolyte solvent comprises at least one of dimethyl carbonate, diethyl carbonate, ethyl methyl carbonate, or ethylene carbonate; and
a mass ratio of the bis(fluorosulfonyl)imide metal compound to the electrolyte solvent ranges from (59:141) to (61:139).

7. The method for preparing the metal bis(fluorosulfonyl)imide liquid salt according to any one of claims 1 to 6, wherein:
the resin comprises one of poly(4-vinylpyridine) resin, poly(N,N-dimethyl-p-styrene) resin, and poly(N,N-diethyl-p-styrene) resin; and
A/B ranges from 1% to 5%, where A represents a mass of the resin, and B represents a mass of the bis(fluorosulfonyl)imide metal compound.

8. The method for preparing the metal bis(fluorosulfonyl)imide liquid salt according to any one of claims 1 to 7, wherein the molten reaction solution is obtained by reacting the bis(fluorosulfonyl)imide with the metal fluoride compound under a solvent-free condition.

9. The method for preparing the metal bis(fluorosulfonyl)imide liquid salt according to claim 8, wherein:
said reacting the bis(fluorosulfonyl)imide with the metal fluoride compound is performed at a reaction temperature ranging from 130°C to 140°C; and
said reacting the bis(fluorosulfonyl)imide with the metal fluoride compound is performed for a reaction duration ranging from 4 hours to 8 hours.

10. The method for preparing the metal bis(fluorosulfonyl)imide liquid salt according to claim 8, wherein a molar ratio of the bis(fluorosulfonyl)imide to the metal fluoride compound is 1:(0.95 to 1.05).

11. The method for preparing the metal bis(fluorosulfonyl)imide liquid salt according to any one of claims 1 to 10, wherein a turbidity of the reaction solution is less than or equal to 100.

12. The method for preparing the metal bis(fluorosulfonyl)imide liquid salt according to any one of claims 1 to 11, wherein the EP1 acidity, calculated as an equivalent amount of hydrofluoric acid, of the reaction solution is less than or equal to 100 ppm.

13. The method for preparing the metal bis(fluorosulfonyl)imide liquid salt according to any one of claims 1 to 12, wherein the bis(fluorosulfonyl)imide comprises:
99.93% by mass to 100% by mass of bis(fluorosulfonyl)imide;
less than or equal to 200 ppm of sulfamate ions;
less than or equal to 300 ppm of fluorosulfonate ions;
less than or equal to 100 ppm of fluorosulfonamide;
less than or equal to 50 ppm of chloride ions; and
less than or equal to 50 ppm of fluoride ions.

14. The method for preparing the metal bis(fluorosulfonyl)imide liquid salt according to any one of claims 1 to 13, wherein the metal fluoride compound comprises one of lithium fluoride, sodium fluoride, potassium fluoride, rubidium fluoride, cesium fluoride, and francium fluoride.

15. The method for preparing the metal bis(fluorosulfonyl)imide liquid salt according to any one of claims 1 to 14, wherein the metal fluoride compound comprises:
99.84% by mass to 100% by mass of a metal fluoride compound;
less than or equal to 1,000 ppm of a metal carbonate compound; and
less than or equal to 600 ppm of moisture.

16. The method for preparing the metal bis(fluorosulfonyl)imide liquid salt according to any one of claims 1 to 15, the method further comprising, prior to the deacidification treatment using the resin:
performing a first filtration treatment on the bis(fluorosulfonyl)imide metal compound solution.

17. The method for preparing the metal bis(fluorosulfonyl)imide liquid salt according to claim 16, the method further comprising, subsequent to the deacidification treatment using the resin:
performing a second filtration treatment on the deacidified solution system.

18. A metal bis(fluorosulfonyl)imide liquid salt, prepared by the method for preparing the bis(fluorosulfonyl)imide metal compound according to any one of claims 1 to 17, wherein the metal bis(fluorosulfonyl)imide liquid salt comprises impurities of sulfamate ions less than or equal to 100 ppm, fluorosulfonate ions less than or equal to 300 ppm, and fluorosulfonamide less than or equal to 10 ppm.

19. The metal bis(fluorosulfonyl)imide liquid salt according to claim 18, further comprising chloride ions and fluoride ions as impurities, wherein:
a content of the chloride ions in the metal bis(fluorosulfonyl)imide liquid salt is not greater than 5 ppm; and
a content of the fluoride ions in the metal bis(fluorosulfonyl)imide liquid salt is not greater than 50 ppm.
